# EUROPÄISCHE PATENTSCHRIFT

(11) **EP 3 574 973 B1**
(45) Veröffentlichungstag und Bekanntmachung des Hinweises auf die Patenterteilung: **12.05.2021**
(21) Anmeldenummer: 19162171.3
(22) Anmeldetag: 12.03.2019
(51) Int. Cl.: B01D 46/00, B01D 46/24

(54) **FILTERANORDNUNG**
FILTER ASSEMBLY
DISPOSITIF FILTRANT

(30) Priorität: 01.06.2018 DE 102018113131
(43) Veröffentlichungstag der Anmeldung: 04.12.2019
(73) Patentinhaber: Faist Anlagenbau GmbH, 86381 Krumbach (DE)
(72) Erfinder: Schlenkermann, Jan, 28201 Bremen (DE)
(74) Vertreter: Charrier Rapp & Liebau

(56) Entgegenhaltungen:
- AT-B- 377 711
- DE-A1-102015 005 414
- US-A- 5 062 867
- US-A- 5 395 409

## Beschreibung

Die Erfindung betrifft eine Filteranordnung für gasförmige Medien nach dem Oberbegriff des Anspruchs 1.

Gattungsgemäße Lochrohrdüsen-Anordnungen werden zur Reinigung von Luftfiltern bzw. Filtern für gasförmige Medien eingesetzt. In einer Vielzahl von Industrieanwendungen, z.B. bei Turbinen oder Generatoren erfolgt die Luftversorgung von außen, wobei die Umgebungsluft häufig stark verschmutzt ist, gerade in Industriegebieten oder Gebieten geringer Luftfeuchtigkeit sowie in Gebieten mit hohem Sandaufkommen. Aus diesem Grunde sind die Lufteinlässe von Luftversorgungsanlagen für industrielle Vorrichtungen mit Filtern versehen, welche sich je nach den Umgebungsbedingungen und dem Verschmutzungsgrad der eingesaugten Luft unterschiedlich schnell zusetzen und gereinigt werden müssen. Die Reinigung erfolgt dadurch, dass auf der Reinraumseite des Filters (also in Durchströmungsrichtung mit der Luft nach dem Filter) ein komprimiertes Gas aus einer Lochrohrdüse mit hoher Geschwindigkeit impulsartig auf das Filtermaterial geblasen wird, um im Filter einen Überdruck zur Umgebung aufzubauen, wodurch das Gas den Filter gegen die übliche Strömungsrichtung durchströmt und dadurch Verschmutzungen im oder auf der Außenseite des Filters abgetragen werden und herabfallen. Diese impulsartige Durchströmung muss in regelmäßigen Abständen erfolgen, wobei die Zeit zwischen zwei Impulsen von dem Verschmutzungsgrad der Umgebungsluft abhängt. Standardmäßig und nach dem sogenannten Aramcotest erfolgt die Reinigung in Abständen von 20 Minuten.

Bei den üblichen Filteranlagen sind in der Regel eine Vielzahl von zylinderförmigen Filtern nebeneinander bzw. nach Art einer Matrix angeordnet und jeder Reihe von Filtern ist eine Lochrohrdüse gegenüberliegend angeordnet, die aus einem Rohr mit seitlichen Düsenanordnungen besteht, welche in das Innere des zum Rohr hin geöffneten zylinderförmigen Filters gerichtet sind und den Gasdruckstoß ausüben können, so dass die Verschmutzungen auf der gegenüberliegenden Einlassseite von der Außenseite der zylinderförmigen Filter abfallen und im Bereich des Bodens entsorgt werden können.

Soweit in den vorliegenden Ansprüchen und der vorliegenden Beschreibung von zylindrischen Filtern die Rede ist, sind darunter auch konische Filter zu verstehen, oder auch Filter, welche einen konischen und einen zylindrischen Anteil aufweisen.

Bei bekannten Anlagen nach dem Stand der Technik weist die Lochrohrdüse im Bereich jedes Filters einen Düseneinsatz auf, der z.B. in die Rohrwandung eingeschraubt werden kann und mit einer Vielzahl von Einzeldüsen versehen ist, z.B. bis zu zwölf kreisförmig angeordneten Einzeldüsen. Diese Bauweise ist teuer, weil sie für jeden Filter ein zusätzliches Bauteil erfordert, nämlich den Düseneinsatz, welcher zusätzlich hergestellt und in das Rohr eingeschraubt werden muss. Darüber hinaus ist die Reinigungsleistung nicht zufriedenstellend, weil auch dem Umstand des Druckabfalls in dem Rohr vom Einspeisepunkt bis zum geschlossenen Ende des Rohres nicht ausreichend Rechnung getragen werden kann.

Die US 5,361,452 beschreibt eine Lochrohrdüse ohne zusätzliche Düseneinsätze, bei der also das Rohr nur mit seitlichen Öffnungen versehen ist, welche den zu reinigenden Filtern gegenüberliegen. Diese Düse ist jedoch zur zentralen Einbringung entlang der Mittelachse eines zylinderförmigen Filters vorgesehen. Die Reinigung mehrerer, nebeneinanderliegender Filter durch gegenüberliegende Positionierung der Lochrohrdüse ist nicht vorgesehen.

Weitere Lochrohrdüsen ähnlicher Bauart sind Gegenstand der US 3,912,173 und der JP 5067514 B1.

Die DE 10 2015 005 414 A1 hat eine Anordnung zur Abreinigung einer Filterpatrone und Düseneinheit zum Gegenstand, bei der die Düseneinheit eine oder mehrere Ausnehmungen aufweist, deren gesamte von Druckluft durchströmbare Querschnittsfläche im Bereich 10 mm² bis 380 mm² liegt, wobei die Ausnehmung oder die Ausnehmungen einen Freistrahl aus Druckluft erzeugen, der von einem aus einer einzelnen kreisrunden Ausnehmung ausgestrahlten Freistrahl abweicht.

Gegenstand der JP 7016413 A2 ist eine Lochrohrdüsenanordnung, bei der die Lochrohrdüse gegenüber den Einlässen benachbarter zylindrischer Filteranordnungen positioniert ist, und welche Gruppen von Öffnungen aufweist, wobei jede Gruppe von Öffnungen einem zu reinigenden zylindrischen Filter gegenübersteht. Die Anzahl der Öffnungen in einer Gruppe nimmt hierbei vom Beaufschlagungspunkt der Lochrohrdüse mit Druckluft ab, ebenso deren Querschnitt.

Die US 5,395,409 A zeigt eine Filteranordnung mit einer Vielzahl baugleicher, zylindrischer Filter, wobei gegenüber den offenen Böden dieser Filter ein Rohr angeordnet ist, welches ein jedem Filter zugeordnete Gruppe seitlicher Öffnungen aufweist, wobei jede Gruppe dieser Öffnungen dem offenen Einlassbereich bzw. Boden eines Filters zugeordnet ist. Impulsartig durch die Öffnungen ausströmendes Gas gelangt so in den Innenraum des Filters und kann das Filtermaterial durchströmen, wodurch auf der Außenseite der Filter daran anhaftende Verschmutzungen im Wege der Rückspülung gelöst werden. Jede Gruppe von Öffnungen weist drei Öffnungen auf. Über den Abstand der Öffnungen in Strömungsrichtung und quer zur Strömungsrichtung wird keine Aussage getroffen.

Die US 5,062,867 A zeigt eine Gruppe von zwei in Reihe angeordnete Spülöffnungen pro Filter in einem Spülrohr, wobei über die Anordnung der Öffnungen keine besondere Aussage getroffen wird.

Ausgehend von der JP 7016413 A2 stellt sich die Aufgabe, eine Filteranordnung nach dem Oberbegriff des Anspruchs 1 so weiterzubilden, dass mit geringem konstruktiven Aufwand eine optimale Reinigungswirkung jedes Filters innerhalb einer linearen Filteranordnung möglich ist.

Gelöst wird diese Aufgabe mit den kennzeichnenden Merkmalen des Anspruchs 1. Vorteilhafte Ausgestaltungen sind den Unteransprüchen entnehmbar.

Gegenstand der Erfindung ist insbesondere eine Filteranordnung für gasförmige Medien, mit einer Vielzahl baugleicher, zylindrischer Filter mit jeweils einer Mittelachse und einem offenen Boden, sowie mit einem gegenüber der offenen Böden der Filter angeordneten, in einer Strömungsrichtung mit Gas durchströmbaren Rohr, welches eine jedem Filter zugeordnete Gruppe seitlicher Öffnungen aufweist. Erfindungsgemäß weist jede Gruppe mindestens drei Öffnungen auf, und der Abstand der in Strömungsrichtung am weitesten voneinander entfernten Öffnungen jeder Gruppe beträgt mindestens das Dreifache wie der Abstand der am weitesten voneinander entfernten Öffnungen jeder Gruppe quer zur Strömungsrichtung, gemessen über den Umfang des Rohrs.

Vorzugsweise beträgt die Ausdehnung jeder Gruppe längs des Rohrs mindestens 40% eines Durchmessers des zugeordneten Filters.

Die Summe der Querschnittsflächen aller Öffnungen innerhalb jeder Gruppe hat mit einer Toleranz von ± 20% den gleichen Wert.

Vorzugsweise weist jede Gruppe, bis auf eine mögliche Abweichung von einer Öffnung, die gleiche Anzahl an Öffnungen auf, wobei die Anzahl der Öffnungen jeder Gruppe zwischen drei und neun, vorzugsweise bei fünf oder sechs, liegt.

In einer bevorzugten Ausgestaltung weisen die Öffnungen einen Durchmesser zwischen 4 mm und 20 mm, vorzugsweise zwischen 8 mm und 18 mm auf.

Vorzugsweise weist der Mittelpunkt jeder Gruppe von Öffnungen einen Abstand von der Mittelachse des ihr zugeordneten Filters auf, wobei die Öffnungen der Gruppen in Relation zur Mittelachse des ihr zugeordneten Filters stromaufwärts angeordnet sind. Hierbei verringert sich der Abstand vom Eintritt der Druckluft in das Rohr in Strömungsrichtung bei jeder Gruppe von Öffnungen.

Vorzugsweise sind die Öffnungen kreisrund oder oval ausgebildet. In einer besonders bevorzugten Ausgestaltung weist mindestens eine Öffnung jeder Gruppe ein zusätzlich eingebrachtes rohrartiges Gebilde auf.

Verschiedene Gruppen von Öffnungen können bezüglich der Anordnung der Öffnungen innerhalb der Gruppe und/oder des Winkels ihrer Strömungsachsen verschieden gestaltet sein.

Vorzugsweise weist jede Öffnung jeweils eine mittig hierzu verlaufende Strömungsachse auf und mindestens eine Strömungsachse einer Öffnung steht in einem spitzen Winkel zu der Mittelachse des zugeordneten Filters.

Vorzugsweise steht eine weitere Strömungsachse mindestens einer weiteren Öffnung derselben Gruppe in einem weiteren, von dem spitzen Winkel der ersten Öffnung verschiedenen Winkel zu der Mittelachse des zugeordneten Filters.

In einer bevorzugten Ausführungsform stehen weitere Strömungsachsen weiterer Öffnungen derselben Gruppe in weiteren, verschiedenen spitzen Winkeln zu der Mittelachse des zugeordneten Filters.

Einige Ausführungsbeispiele der Erfindung werden im Folgenden anhand der begleitenden Zeichnungen näher erläutert. Diese zeigen:
- **Fig. 1**: eine Seitenansicht einer erfindungsgemäßen Lochrohrdüse;
- **Fig. 2**: eine Vorderansicht der in Fig. 1 gezeigten Lochrohrdüse nach Drehung um 90° um die Längsrichtung 4 des Rohrs 1;
- **Fig. 3**: eine Detaildarstellung des Details A aus Fig. 2;
- **Fig. 4**: eine schematische Darstellung der Verteilung der aus den Öffnungen des Rohrs austretenden Druckluft über den Boden des Filters bei drei Öffnungen;
- **Fig. 5**: eine Darstellung gemäß Fig. 4 bei einer Ausführungsform mit vier Öffnungen;
- **Fig. 6**: eine Darstellung gemäß Fig. 4 und 5 bei einer Ausführungsform mit fünf Öffnungen;
- **Fig. 7**: eine Darstellung gemäß Fig. 4 bis 6 bei einer Ausführungsform mit sechs Öffnungen;
- **Fig. 8**: einen stark vergrößerten Schnitt durch eine Seitenwand des Rohrs 1 bei einer speziellen Ausführungsform der Erfindung;
- **Fig. 9**: einen stark vergrößerten Schnitt durch eine Seitenwand des Rohrs 1 bei einer anderen speziellen Ausführungsform der Erfindung;
- **Fig. 10**: eine Seitenansicht eines Filters mit gegenüberliegendem Rohr;
- **Fig. 11**: eine Darstellung gemäß Figur 10 um 90° gegenüber der Mittelachse 7 gedreht;
- **Fig. 12**: eine schematische Darstellung eines Teils der in den Fig. 1 und 2 gezeigten Lochrohrdüse im eingebauten Zustand gegenüber einer Anordnung von Filtern.

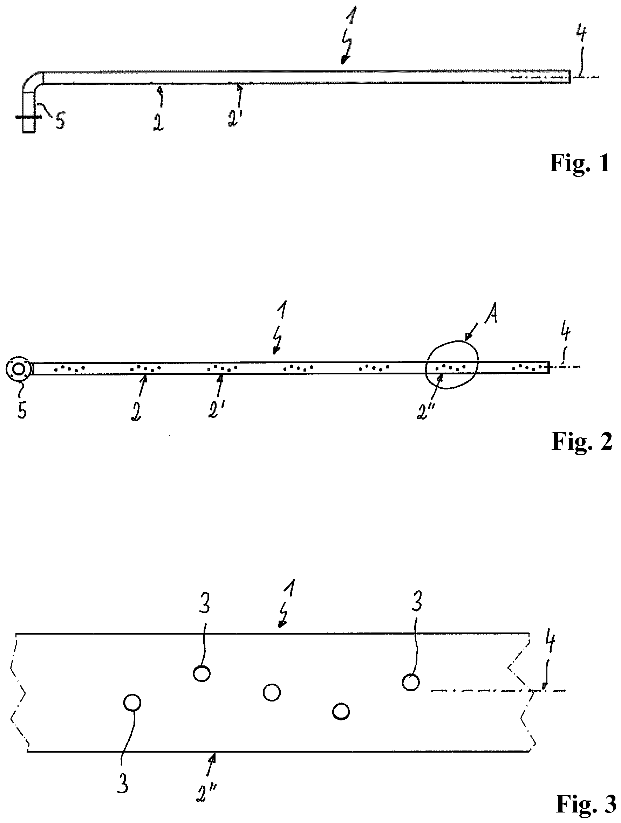

Die Figuren 1 - 3 zeigen eine zur Verwirklichung der Erfindung benutzte Lochrohrdüse welche - insoweit in an sich bekannter Weise - aus einem Rohr 1 aus Metall besteht, welches an einer Seite (in den Figuren 1 und 2 links) eine Kröpfung mit einer Beaufschlagungsstelle 5 aufweist, über welche das Rohr 1 mit Druckluft bzw. impulsartigen Druckluftstößen beaufschlagt werden kann. Das andere Ende des Rohrs 1 (in den Zeichnungen rechts dargestellt) ist geschlossen. Die Bezugszahl 4 bezeichnet die Längsrichtung des Rohrs 1.

Wie insbesondere der Figur 1 und der Detaildarstellung in Figur 3 zu entnehmen ist, weist das Rohr 1 eine Vielzahl von Gruppen 2 seitlicher Öffnungen 3 auf. Im dargestellten Ausführungsbeispiel handelt es sich um sieben Gruppen 2, 2', 2". Jede dieser Gruppen 2, 2', 2" weist fünf Öffnungen 3 auf, welche vorzugsweise als Bohrungen durch die Wandung des Rohrs 1 ausgebildet und in einer charakteristischen Weise, wie sie insbesondere Figur 3 zu entnehmen ist, angeordnet sind, nämlich hier in einem Verlauf, der dem einer Sinuskurve ähnelt, wobei andere Verläufe ebenfalls möglich sind. Unter Berücksichtigung der Krümmung der Wandung des Rohrs 1 entspricht diese Anordnung aus fünf Öffnungen innerhalb der Gruppe 2" in etwa der Anordnung der Zahl "5" auf der Seite eines Würfels. Sämtliche Öffnungen 3 innerhalb aller Gruppen 2, 2', 2" weisen in etwa den gleichen Querschnitt auf, wobei Abweichungen bis zu einer Toleranzgrenze von +/- 20% möglich sind. Ferner enthält jede Gruppe 2, 2', 2" von Öffnungen 3 die gleiche Anzahl von Öffnungen 3, im dargestellten Ausführungsbeispiel fünf Öffnungen 3 pro Gruppe 2, 2' bzw. 2".

Wie den Figuren 2 und 3, insbesondere jedoch der Figur 3 zu entnehmen ist, weist jede Gruppe mindestens drei Öffnungen, im dargestellten Ausführungsbeispiel sind es fünf Öffnungen, auf, und der Abstand der in Strömungsrichtung L am weitesten voneinander entfernten Öffnungen jeder Gruppe 2" beträgt mindestens das Dreifache wie der Abstand der am weitesten voneinander entfernten Öffnungen 3 jeder Gruppe 2" quer zur Strömungsrichtung L, gemessen über den Umfang des Rohrs 1. Unter "Abstand" ist hierbei die gesamte Ausdehnung der Gruppe 2" in Strömungsrichtung L bzw. quer zur Strömungsrichtung L zu verstehen, d.h., dass der Durchmesser der Öffnungen 3 mit zu dem Abstand zählt.

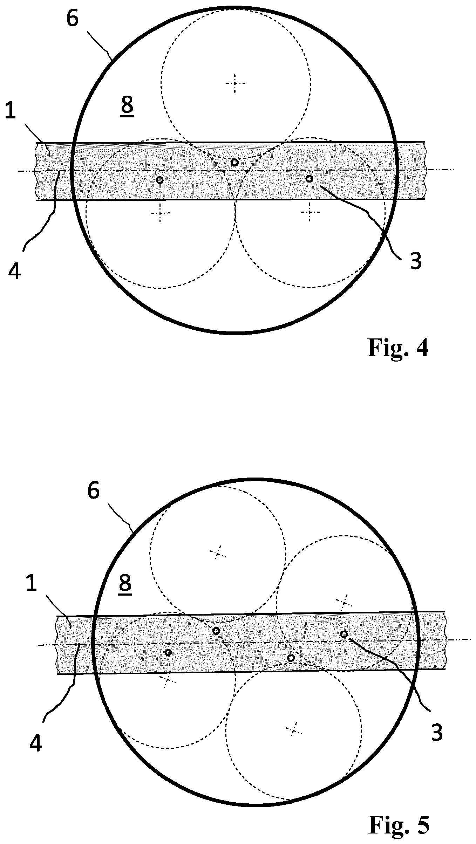

Die Figuren 4 - 7 zeigen schematisch den Strömungsverlauf und die Wirkung verschiedener Anordnungen von Öffnungen 3 in der Wandung des Rohrs 4 auf den offenen Boden 8 des Filters 6. Die Figuren 4 - 7 zeigen somit vier verschiedene Ausführungsformen. Hierbei ist der Umfang des Filters 6 im Bereich der Fläche seines offenen Bodens 8 schematisch durch einen Kreis dargestellt. Darunter liegt das Rohr 4 mit den Öffnungen 3. Ferner weist die Zeichnung drei aneinander angrenzende, gestrichelt dargestellte Kreise auf, deren Mittelpunkt durch strichpunktierte Kreuze markiert sind. In Figur 4 weist das Rohr 1 drei Öffnungen 3 auf, welche in einem Winkel zur Längsrichtung 4 des Rohrs 1 (und damit zur Strömungsrichtung L) sowie in einem Winkel zur Mittelachse 7 des Filters 6 angeordnet sind, so dass das aus den Öffnungen 3 stoßweise austretende komprimierte Gas in den Bereichen der strichpunktierten Kreuze auf den offenen Boden 8 des Filters 6 trifft. Da der Strömungsverlauf von der Öffnung 3 bis zum Boden 8 des Filters 6 sich kegelförmig erweitert, werden damit die durch die strichpunktierten Kreise umschlossenen Flächen mit der stoßweise austretenden Druckluft aus den Öffnungen 3 beaufschlagt. Wie bereits Figur 4 mit nur drei Öffnungen zu entnehmen ist, decken diese Flächen einen Großteil der Bodenfläche 8 des Filters 6 ab und sorgen somit für einen weitgehend homogenen Eintritt des Reinigungsgases in das Innere des Filters 6 , was wiederum zu einer sehr guten Reinigung des auf der Mantelfläche des Filters 6 aufgebrachten textilen Gewebes oder Vlieses führt.

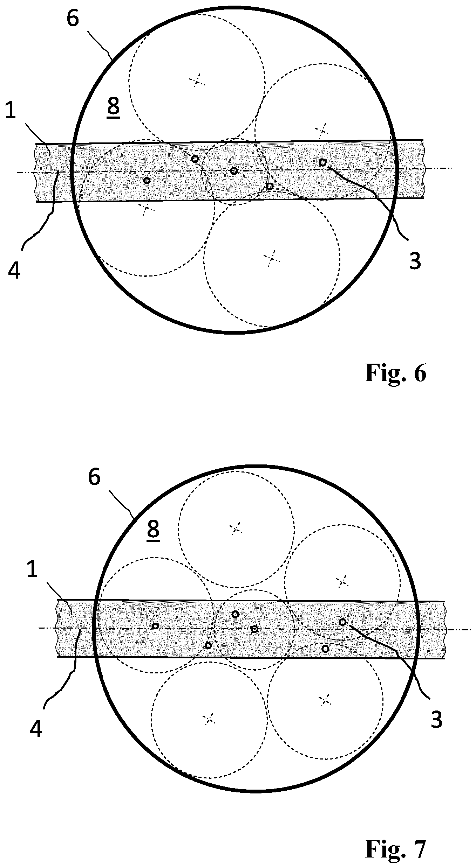

In Figur 5 ist die gleiche Situation mit vier Öffnungen und vier entsprechend aneinander angrenzenden strichpunktierten Kreisen dargestellt, in Figur 6 mit fünf Öffnungen, wobei hier die mittlere Öffnung einen geringeren Durchmesser aufweist als die beiden seitlich links und rechts daran angrenzenden Öffnungen in der Wandung des Rohrs 1, wodurch der mittlere Kreis einen geringeren Durchmesser hat und sich in die ihn umschließenden vier Kreise mit größerem Durchmesser einfügt. Ähnlich verhält es sich bei der Anordnung gemäß Figur 7 mit sechs Öffnungen.

Aus der Abfolge der Figuren 4 - 7 ist ersichtlich, dass eine größere Anzahl von Öffnungen 3 innerhalb der Wandung des Rohrs 1 zu einem höheren, mit Druckluft beaufschlagten Querschnitt in der Ebene des Bodens 8 des Filters 6 führt und somit auch zu einer gründlicheren Reinigung. Bei einer zu großen Anzahl von Öffnungen 3 nimmt die Reinigungsleistung allerdings wieder ab, so dass die optimale Anzahl zwischen drei und neun Öffnungen liegt.

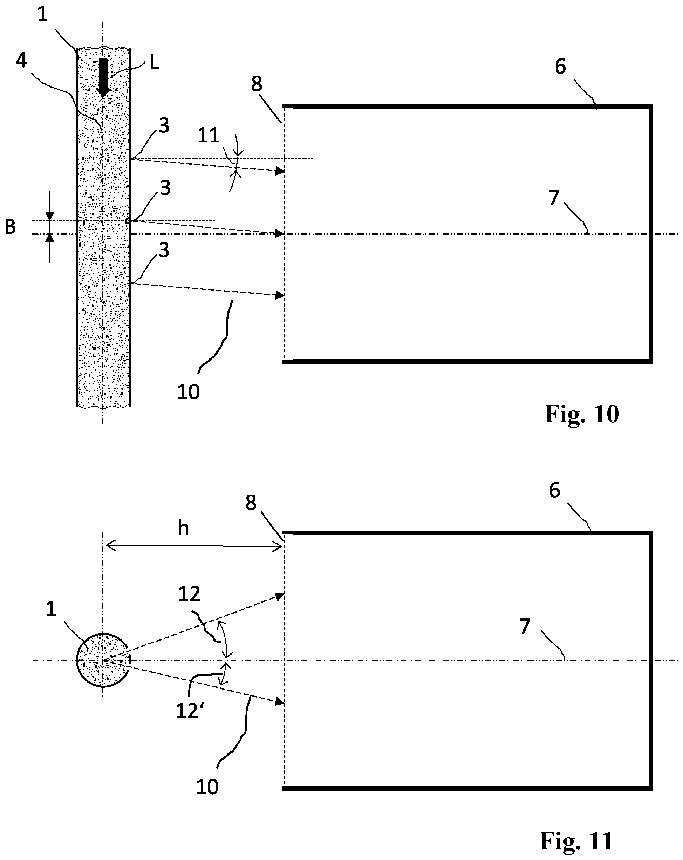

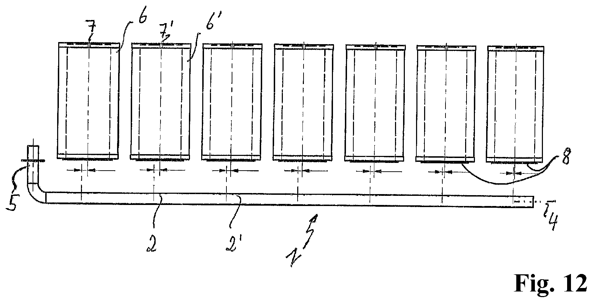

In einer besonders bevorzugten, in den Figuren 10 bis 12 dargestellten Ausführungsform, ist der Abstand B zwischen den Mittelachsen 7 aufeinanderfolgender Filter 6 und dem Mittelpunkt jeder Gruppe 2 bzw. 2' von Öffnungen 3 nicht konstant. Vielmehr verringert sich dieser Abstand B, B', B" in Strömungsrichtung L, um der abnehmenden Geschwindigkeit des Gases innerhalb des Rohrs 1 Rechnung zu tragen. Wird diese Geschwindigkeit geringer, strömt das Gas unter einem zunehmend senkrechter werdenden Winkel aus den Öffnungen 3 des Rohrs 1 aus, so dass der Abstand B zwischen den Mittelachsen 7 der Filter 6 und dem Mittelpunkt der Gruppen 2 bzw. 2' sich verringert, um eine gleichmäßige Beaufschlagung aller Böden 8 der Filter 6 zu erzielen. In den Figuren sind die zu reinigenden Filter mit den Bezugszeichen 6, 6' etc. versehen. Es handelt sich um zylinderförmige Filter 6 mit Mittelachsen 7 bzw. 7'. Wie den Figuren zu entnehmen ist, verringern sich die Abstände B bzw. B', B", gesehen von der Beaufschlagungsstelle 5 des Rohrs 1 mit Druckluft. Bei dem letzten der in Figur 12 dargestellten sieben Filter 6 ist die Mitte der Gruppe 2 von Öffnungen 3 fast fluchtend mit der entsprechenden Mittelachse 7 dieses letzten Filters 6. Auf diese Weise kann ein Geschwindigkeitsabfall innerhalb des Rohrs 1 ausgeglichen werden, weil sich die Relativposition zwischen der jeweiligen Gruppe 2 von Öffnungen 3 und der Mittelachse 7 bzw. 7' des zu reinigenden zylinderförmigen Filters 6 bzw. 6' ändert.

Figur 11 zeigt die Anordnung aus Figur 10 um 90° um die Mittelachse 7 gedreht, also in Durchströmungsrichtung L des Rohrs 1. Die Mitte des Rohrs 1 befindet sich in einem Abstand h von dem Boden 8 des Filters 6, genauso wie in Figur 10. Die Winkel 12 bzw. 12' zeigen hier den Abstand der am weitesten voneinander entfernten Öffnungen 3 quer zur Strömungsrichtung L entlang des Umfangs des Rohrs 1. Die verschiedenen Winkel 12 bzw. 12' entstehen durch die Notwendigkeit, eines der in den Figuren 4 - 7 dargestellten Beaufschlagungsmuster des Bodens 8 des Filters 6 zu erzielen.

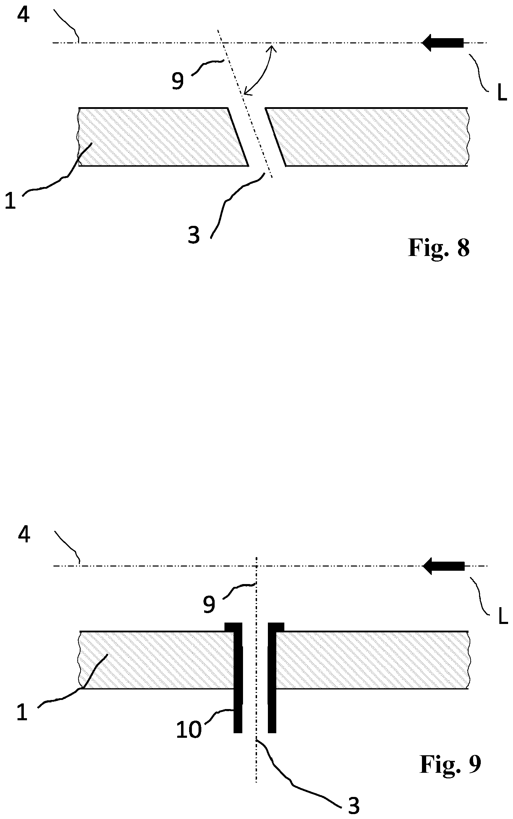

In einer weiteren Ausführungsform, wie sie in Figur 8 anhand eines vergrößerten Schnitts durch die Wandung des Rohrs 1 dargestellt ist, weisen die einzelnen Öffnungen 3 jeder Gruppe 2 eine Bohrungsachse 9 (also ihre Mittelachse) auf, welche in einem Winkel von weniger als 90°, also in einem spitzen Winkel, bezogen sowohl auf die Mittelachse 7 des Filters 6 als auch auf die Längsrichtung 4 des Rohrs 1, angeordnet sind. Dies bedeutet, dass die Öffnungen 3, bezogen auf die Wandung des Rohrs 1 bzw. dessen Längsrichtung 4 schräg verlaufen. Der schräge Verlauf ist bspw. durch eine schräge Bohrung verwirklicht.

Dieser schräge Verlauf der Bohrungsachse 9 jeder Öffnung 3 erfolgt entgegen der Strömungsrichtung L, so dass das durch die Öffnungen 3 austretende Gas bei der richtigen Wahl des Bohrungswinkels letztendlich unter einem rechten Winkel von seiner Strömungsrichtung L durch das Rohr 1 abgelenkt wird, wenn es die Öffnungen 3 durchtritt. Es ist jedoch auch möglich, die Mittelachsen 9 der Öffnungen 3 in einer senkrecht zur Längsrichtung 4 des Rohrs 1 verlaufenden Ebene schräg auszubilden, so dass die durchströmende Luft, bezogen auf ihre ursprüngliche Strömungsrichtung entlang der Längsrichtung 4 des Rohres nicht nur aus dem Rohr 4 herausgedrückt, sondern auch seitlich abgelenkt wird.

In einer weiteren, in Figur 9 dargestellten Ausführungsform der Erfindung können die Öffnungen 3 jeder Gruppe 2 ein zusätzlich eingebrachtes rohrartiges Gebilde 10 aufweisen, wobei es sich beispielsweise um eine Hülse mit einem Anschlag handeln kann. Vorzugsweise sind diese rohrartigen Gebilde 10 fest mit der Wandung des Rohrs 1 zu verbinden, um ein Loslösen dieser Einzelteile unter der hohen Druckbelastung zu verhindern. Durch das rohrartige Gebilde kann die Luft gezielter in seiner Austrittsrichtung gelenkt werden.

Vorzugsweise weisen die Öffnungen 3 einen Durchmesser zwischen 4 und 20 mm, vorzugsweise wiederum zwischen 8 und 16 mm auf.

Die verschiedenen Gruppen 2 der Öffnungen 3 können bezüglich der Anordnung der Öffnungen 3 innerhalb der Gruppe 2 und/oder der Neigung der Mittelachsen 9 mindestens einer Öffnung 3 bezüglich der Längsrichtung 4 des Rohres 1 verschieden gestaltet sein, d.h. es muss nicht jede Gruppe 2, 2' und 2" in identischer Weise ausgebildet sein.

Die Filter 6 weisen einen Zylinder aus einem Filtermaterial auf, der gegenüber des offenen Bodens 8 (nicht dargestellt) ebenfalls mit Filtermaterial geschlossen sein kann. Die Zylinder 6 bzw. 6' sind zur reinen Seite (in der Figur 11 unten) geöffnet. An dieser Seite befindet sich das Rohr 1 der Lochrohrdüse mit den Gruppen 2 von Öffnungen 3. Jede Gruppe 2 von Öffnungen 3 ist dem offenen Einlassbereich bzw. Boden 8 eines Filters 6 zugeordnet, so dass die impulsartig durch die Öffnungen 3 ausströmende Luft in den Innenraum jedes Filters 6 gelangen und dort das Filtermaterial durchströmen kann, wodurch auf der Außenseite (in der Figur 11 oben), also der unreinen Seite der Filter 6 die daran anhaftenden Verschmutzungen gelöst werden und herabfallen.

Die Wahl der Anzahl der Öffnungen 3 und die konstante Anzahl innerhalb jeder Gruppe 2 führt dazu, dass der impulsartig aufgebaute Druck im Eingangsbereich jedes zylinderförmigen Filters 6 über die gesamte Fläche konstant ist, so dass sich keine Gegenströmung aus dem zu reinigenden Filter heraus bilden kann. Je mehr Öffnungen 3 in jeder Gruppe 2 vorhanden sind, umso leichter lässt sich ein konstanter Druck im Eingangsbereich des Filters 6 aufbauen. Es genügen jedoch bereits drei Öffnungen 3, um einen solchen Druck im Eingangsbereich des Filters 6 konstant zu halten. Besonders vorteilhaft ist eine Ausgestaltung mit fünf Öffnungen, die jedoch in dem Rohr 1 nicht exakt nach Art eines Würfel-Fünf-Musters angeordnet sind, sondern verzerrt, wie in Figur 3 dargestellt.

Versuche haben ergeben, dass das tatsächliche Strömungsbild im Bereich des Einlasses der zu reinigenden Filter nicht dem Bild der Öffnungen in der Wandung des Rohrs entspricht, da die einzelnen Luftstrahlen, wie sie aus jeder Öffnung austreten, sich durch den entstehenden Unterdruck gegenseitig anziehen. Somit ergibt sich aus einer asymmetrischen Anordnung der Öffnungen 3 in jeder Gruppe 2, 2' bzw. 2" letztlich eine symmetrische Druckverteilung mit einem konstanten Druck über die gesamten Boden 8 des zu reinigenden zylinderförmigen oder konischen Filters 6.

## Patentansprüche

1. Filteranordnung für gasförmige Medien, mit einer Vielzahl baugleicher, zylindrischer Filter (6) mit jeweils einer Mittelachse (7) und einem offenen Boden (8), sowie mit einem gegenüber der offenen Böden (8) der Filter (6) angeordneten, in einer Strömungsrichtung (L) in Längsrichtung (4) durchströmbaren Rohr (1), welches eine jeden Filter (6) zugeordnete Gruppe (2, 2') seitliche Öffnungen (3) aufweist, wobei jede Gruppe (2, 2') dieser seitlichen Öffnungen (3) dem offenen Einlassbereich bzw. Boden (8) eines Filters (6) zugeordnet ist, wodurch impulsartig durch die Öffnungen (3) ausströmendes Gas in den Innenraum jedes Filters (6) gelangen und dort das Filtermaterial durchströmen kann, wodurch auf der Außenseite der Filter (6) daran anhaftende Verschmutzungen gelöst werden,, **dadurch gekennzeichnet, dass** jede Gruppe (2, 2') mindestens drei Öffnungen aufweist, und der Abstand der in Strömungsrichtung (L) am weitesten voneinander entfernten Öffnungen (3) jeder Gruppe (2, 2') mindestens das Dreifache beträgt wie der Abstand der am weitesten voneinander entfernen Öffnungen (3) jeder Gruppe (2, 2') quer zur Strömungsrichtung (L), gemessen über den Umfang des Rohrs (1).

2. Filteranordnung nach Anspruch 1, **dadurch gekennzeichnet, dass** die Ausdehnung jeder Gruppe (2, 2') längs des Rohrs (1) mindestens 40% eines Durchmessers des zugeordneten Filters (6) beträgt.

3. Filteranordnung nach einem der voranstehenden Ansprüche, **dadurch gekennzeichnet, dass** die Summe der Querschnittsflächen aller Öffnungen (3) innerhalb jeder Gruppe (2, 2') mit einer Toleranz von plus minus 20% den gleichen Wert hat.

4. Filteranordnung nach einem der voranstehenden Ansprüche, **dadurch gekennzeichnet, dass** jede Gruppe (2,2'), bis auf eine mögliche Abweichung von einer Öffnung, die gleiche Anzahl an Öffnungen (3) aufweist.

5. Filteranordnung nach einem der voranstehenden Ansprüche, **dadurch gekennzeichnet, dass** die Anzahl der Öffnungen (3) jeder Gruppe (2, 2') zwischen drei und neun, vorzugsweise bei fünf oder sechs, liegt.

6. Filteranordnung nach einem der voranstehenden Ansprüche, **dadurch gekennzeichnet, dass** die Öffnungen (3) einen Durchmesser zwischen 4 mm und 20 mm, vorzugsweise zwischen 8 mm und 16 mm aufweisen.

7. Filteranordnung nach einem der voranstehenden Ansprüche, **dadurch gekennzeichnet, dass** der Mittelpunkt jeder Gruppe (2, 2') von Öffnungen (3) einen Abstand (B) von der Mittelachse (7) des ihr zugeordneten Filters (6) aufweist, wobei die Öffnungen (3) der Gruppen (2, 2') in Relation zur Mittelachse (7) des ihr zugeordneten Filters (6) stromaufwärts angeordnet sind.

8. Filteranordnung nach Anspruch 7, **dadurch gekennzeichnet, dass** sich der Abstand (B) vom Eintritt (5) der Druckluft in das Rohr (1) in Strömungsrichtung (L) bei jeder Gruppe (2, 2') von Öffnungen (3) verringert.

9. Filteranordnung nach einem der voranstehenden Ansprüche, **dadurch gekennzeichnet, dass** die Öffnungen (3) kreisrund oder oval ausgebildet sind.

10. Filteranordnung nach einem der voranstehenden Ansprüche, **dadurch gekennzeichnet, dass** mindestens eine Öffnung (3) jeder Gruppe (2, 2') ein zusätzlich eingebrachtes rohrartiges Gebilde (10) aufweist.

11. Filteranordnung nach einem der voranstehenden Ansprüche, **dadurch gekennzeichnet, dass** die verschiedenen Gruppen (2, 2') von Öffnungen (3) bezüglich der Anordnung der Öffnungen (3) innerhalb der Gruppe (2, 2') und/oder des Winkels ihrer Strömungsachsen verschieden gestaltet sind.

12. Filteranordnung nach einem der voranstehenden Ansprüchen, **dadurch gekennzeichnet, dass** jede Öffnung (3) jeweils eine mittig hierzu verlaufende Strömungsachse (9) aufweiset und mindestens eine Strömungsachse (9) einer Öffnung (3) in einem spitzen Winkel zu der Mittelachse (7) des zugeordneten Filters (6) steht.

13. Filteranordnung nach Anspruch 12, **dadurch gekennzeichnet, dass** eine weitere Strömungsachse (9) mindestens einer weiteren Öffnung (3) der selben Gruppe (2, 2') in einem weiteren, von dem spitzen Winkel der ersten Öffnung (3) verschiedenen Winkel zu der Mittelachse (7) des zugeordneten Filters (6) steht.

14. Filteranordnung nach Anspruch 13, **dadurch gekennzeichnet, dass** weitere Strömungsachsen weiterer Öffnungen (3) derselben Gruppe (2, 2') in weiteren, verschiedenen spitzen Winkeln zu der Mittelachse (7) des zugeordneten Filters (6) stehen.

## Claims

1. Filter assembly for gaseous media having a plurality of structurally identical, cylindrical filters (6) with respectively a central axis (7) and an open base (8), and with a pipe (1) arranged opposite the open bases (8) of the filters (6) through which there is flow in a flow direction (L) in longitudinal direction (4) and which has a group (2, 2') of lateral openings (3) assigned to each filter (6), wherein each group (2, 2') of these lateral openings (3) is assigned to the open inlet region or base (8) of a filter (6), whereby gas flowing out pulse-wise through the openings (3) may reach the interior of each filter (6) and flow through the filter material there, whereby contaminants on the outer side of the filters (6) adhering thereto are released, **characterised in that** each group (2, 2') has at least three openings, and the distance of the openings (3) of each group (2, 2') furthest away from one another in flow direction (L) is at least three times the distance of the openings (3) of each group (2, 2') furthest away from one another transversely to the flow direction (L), measured over the circumference of the pipe (1).

2. Filter assembly according to claim 1, **characterised in that** the expansion of each group (2, 2') along the pipe (1) is at least 40% of a diameter of the assigned filter (6).

3. Filter assembly according to one of the preceding claims, **characterised in that** the sum of the cross-sectional surfaces of all openings (3) within each group (2, 2') has the same value with a tolerance of plus or minus 20%.

4. Filter assembly according to one of the preceding claims, **characterised in that** each group (2, 2'), except for a possible deviation of one opening, has the same number of openings (3).

5. Filter assembly according to one of the preceding claims, **characterised in that** the number of openings (3) of each group (2, 2') lies between three and nine, preferably at five or six.

6. Filter assembly according to one of the preceding claims, **characterised in that** the openings (3) have a diameter between 4 mm and 20 mm, preferably between 8 mm and 16 mm.

7. Filter assembly according to one of the preceding claims, **characterised in that** the central point of each group (2, 2') of openings (3) has a distance (B) from the central axis (7) of the filter (6) assigned thereto, wherein the openings (3) of the groups (2, 2') are arranged upstream in relation to the central axis (7) of the filter (6) assigned thereto.

8. Filter assembly according to claim 7, **characterised in that** the distance (B) from the inlet (5) of compressed air into the pipe (1) in flow direction (L) is reduced for each group (2, 2') of openings (3).

9. Filter assembly according to one of the preceding claims, **characterised in that** the openings (3) are designed to be circular or oval.

10. Filter assembly according to one of the preceding claims, **characterised in that** at least one opening (3) of each group (2, 2') has an additionally introduced pipe-like structure (10).

11. Filter assembly according to one of the preceding claims, **characterised in that** the different groups (2, 2') of openings (3) are designed to be different with regard to the arrangement of openings (3) within the group (2, 2') and/or the angle of their flow axes.

12. Filter assembly according to one of the preceding claims, **characterised in that** each opening (3) has respectively a flow axis (9) running centrally thereto and at least one flow axis (9) of an opening (3) is at an acute angle to the central axis (7) of the assigned filter (6).

13. Filter assembly according to claim 12, **characterised in that** a further flow axis (9) of at least one further opening (3) of the same group (2, 2') is at a further angle, which is different from the acute angle of the first opening (3), to the central axis (7) of the assigned filter (6).

14. Filter assembly according to claim 13, **characterised in that** further flow axes of further openings (3) of the same group (2, 2') are at further, different acute angles to the central axis (7) of the assigned filter (6).

## Revendications

1. Ensemble filtrant pour des milieux gazeux avec une pluralité de filtres (6) cylindriques à structure similaire avec respectivement un axe central (7) et un fond ouvert (8), ainsi qu'avec un tuyau (1) disposé en regard des fonds (8) ouverts des filtres (6), pouvant être traversé dans une direction d'écoulement (L) dans le sens longitudinal (4), lequel présente un groupe (2, 2') d'ouvertures latérales (3) associé à chaque filtre (6), dans lequel chaque groupe (2, 2') desdites ouvertures (3) latérales est associé à la zone d'admission ouverte ou au fond (8) ouvert d'un filtre (6), ce qui a pour effet que du gaz sortant par impulsions par les ouvertures (3) peut parvenir dans l'espace intérieur de chaque filtre (6) et peut y traverser le matériau filtrant, ce qui a pour effet que des impuretés y adhérant sont dissoutes sur le côté extérieur des filtres (6), **caractérisé en ce que** chaque groupe (2, 2') présente au moins trois ouvertures, et la distance entre les ouvertures (3), les plus éloignées les unes des autres dans la direction d'écoulement (L), de chaque groupe (2, 2') est au moins trois fois supérieure à la distance entre les ouvertures (3), les plus éloignées les unes des autres, de chaque groupe (2, 2') de manière transversale par rapport à la direction d'écoulement (L), mesurée sur la périphérie du tuyau (1).

2. Ensemble filtrant selon la revendication 1, **caractérisé en ce que** l'extension de chaque groupe (2, 2') le long du tuyau (1) est d'au moins 40 % d'un diamètre du filtre (6) associé.

3. Ensemble filtrant selon l'une quelconque des revendications précédentes, **caractérisé en ce que** la somme des surfaces de section transversale de toutes les ouvertures (3) au sein de chaque groupe (2, 2') a la même valeur avec une tolérance de plus ou moins 20 %.

4. Ensemble filtrant selon l'une quelconque des revendications précédentes, **caractérisé en ce que** chaque groupe (2, 2'), hormis un possible écart d'une ouverture, présente le même nombre d'ouvertures (3).

5. Ensemble filtrant selon l'une quelconque des revendications précédentes, **caractérisé en ce que** le nombre des ouvertures (3) de chaque groupe (2, 2') est compris entre trois et neuf, de préférence est de l'ordre de cinq ou six.

6. Ensemble filtrant selon l'une quelconque des revendications précédentes, **caractérisé en ce que** les ouvertures (3) présentent un diamètre entre 4 mm et 20 mm, de préférence entre 8 mm et 16 mm.

7. Ensemble filtrant selon l'une quelconque des revendications précédentes, **caractérisé en ce que** le point central de chaque groupe (2, 2') d'ouvertures (3) présente une distance (B) par rapport à l'axe central (7) du filtre (6) qui lui est associé, dans lequel les ouvertures (3) des groupes (2, 2') sont disposées en amont en relation par rapport à l'axe central (7) du filtre (6) qui lui est associé.

8. Ensemble filtrant selon la revendication 7, **caractérisé en ce que** la distance (B) par rapport à l'entrée (5) de l'air comprimé dans le tuyau (1) se réduit dans la direction d'écoulement (L) pour chaque groupe (2, 2') d'ouvertures (3).

9. Ensemble filtrant selon l'une quelconque des revendications précédentes, **caractérisé en ce que** les ouvertures (3) sont réalisées de manière ronde circulaire ou de manière ovale.

10. Ensemble filtrant selon l'une quelconque des revendications précédentes, **caractérisé en ce qu'**au moins une ouverture (3) de chaque groupe (2, 2') présente une structure (10) de type tubulaire pratiquée en supplément.

11. Ensemble filtrant selon l'une quelconque des revendications précédentes, **caractérisé en ce que** les différents groupes (2, 2') d'ouvertures (3) sont configurés de manière différente concernant l'agencement des ouvertures (3) à l'intérieur du groupe (2, 2') et/ou l'angle de leurs axes d'écoulement.

12. Ensemble filtrant selon l'une quelconque des revendications précédentes, **caractérisé en ce que** chaque ouverture (3) présente respectivement un axe d'écoulement (9) s'étendant au centre par rapport à celle-ci et au moins un axe d'écoulement (9) d'une ouverture (3) est situé selon un angle aigu par rapport à l'axe central (7) du filtre (6) associé.

13. Ensemble filtrant selon la revendication 12, **caractérisé en ce qu'**un autre axe d'écoulement (9) d'au moins une autre ouverture (3) du même groupe (2, 2') est situé selon un autre angle, différent de l'angle aigu de la première ouverture (3), par rapport à l'axe central (7) du filtre (6) associé.

14. Ensemble filtrant selon la revendication 13, **caractérisé en ce que** d'autres axes d'écoulement d'autres ouvertures (3) du même groupe (2, 2') sont situés selon d'autres angles aigus différents par rapport à l'axe central (7) du filtre (6) associé.
